# EUROPÄISCHE PATENTSCHRIFT

(11) **EP 2 242 991 B1**
(45) Veröffentlichungstag und Bekanntmachung des Hinweises auf die Patenterteilung: **30.04.2014**
(21) Anmeldenummer: 09710945.8
(22) Anmeldetag: 29.01.2009
(51) Int. Cl.: G01B 13/02

(54) **VORRICHTUNG UND VERFAHREN ZUR GEOMETRIEMESSUNG AN EINEM WERKSTÜCK**
DEVICE AND METHOD FOR GEOMETRY MEASUREMENT ON A WORKPIECE
DISPOSITIF ET PROCÉDÉ DE MESURE GÉOMÉTRIQUE D'UNE PIÈCE À USINER

(30) Priorität: 14.02.2008 DE 102008010337
(43) Veröffentlichungstag der Anmeldung: 27.10.2010
(73) Patentinhaber: MARPOSS GMBH, 71384 Weinstadt (DE)
(72) Erfinder: BASAR, Ivan, 70469 Stuttgart (DE)
(74) Vertreter: Hoeger, Stellrecht & Partner Patentanwälte
(86) Internationale Anmeldenummer: PCT/EP2009/050989
(87) Internationale Veröffentlichungsnummer: WO 2009/100987

(56) Entgegenhaltungen:
- EP-A- 1 431 709
- DE-A1- 4 407 159
- DE-A1- 10 236 402

## Beschreibung

Die vorliegende Erfindung betrifft eine Vorrichtung zur Geometriemessung an einem Werkstück, umfassend ein Gehäuse mit einem Strömungskanal, in welchem eine Düse zur Durchströmung mit einem Messfluid in einer Messfluidströmungsrichtung angeordnet ist, welche Vorrichtung mindestens eine Strömungsberuhigungseinrichtung, welche in Messfluidströmungsrichtung gesehen vor oder hinter der Düse angeordnet ist, wobei eine erste Druckmesseinrichtung zum Messen eines in Messfluidströmungsrichtung gesehen vor der Düse anliegenden ersten Messfluiddrucks und/oder mindestens eine zweite Druckmesseinrichtung zum Messen eines in Messfluidströmungsrichtung gesehen hinter der Düse anliegenden zweiten Messfluiddrucks und/oder mindestens eine Druckmesseinrichtung zum Messen eines über der Düse anliegenden Messfluiddifferenzdrucks vorgesehen sind.

Eine Vorrichtung zur Geometriemessung an einem Werkstück, umfassend ein Gehäuse mit einem Strömungskanal, in welchem eine Düse zur Durchströmung mit einem Messfluid in einer Messfluidströmungsrichtung angeordnet ist, ist aus der DE 102 36 402 A1 bekannt. Ferner ist eine Vorrichtung der eingangs beschriebenen Art aus der EP 1 431 709 A2 bekannt.

Vorrichtungen dieser Art werden beispielsweise für Messungen eines Innenoder eines Außendurchmessers eines Werkstücks verwendet. Hierbei wird ein Messfluid einem Strömungskanal zugeführt. Das Messfluid- durchströmt den Strömungskanal entlang einer Messfluidströmungsrichtung. Das Messfluid- ist mit einem ersten Messfluiddruck beaufschlagt, durchströmt zunächst eine in dem Strömungskanal angeordnete Düse und wird dann einer mit dem Strömungskanal fluidwirksam verbundenen Messdüse zugeführt. Das Messfluidströmt aus der Messdüse heraus in einen als Drosselstelle wirkenden Spalt zwischen der Messdüse und dem zu vermessenden Werkstück. Die von der Werkstückgeometrie abhängige Größe des Spalt beeinflusst die Drosselwirkung des Spalts und somit einen zwischen der in dem Gehäuse angeordneten Düse und der Messdüse anliegenden zweiten Messfluiddruck. Auf diese Weise lässt sich durch Messung des ersten Messfluiddrucks und des zweiten Messfluiddrucks die Werkstückgeometrie bestimmen.

Bei einer Vielzahl von Werkstücken, beispielsweise bei Teilen von Einspritzpumpen oder Werkzeugmaschinen, ist es erforderlich, Werkstückabmessungen mit kleinsten Toleranzen herzustellen und die Einhaltung dieser Werkstückabmessungen zu überprüfen.

Hiervon ausgehend liegt der vorliegenden Erfindung die Aufgabe zu Grunde, eine Vorrichtung der eingangs genannten Art zu schaffen, welche besonders genaue Geometriemessungen ermöglicht.

Diese Aufgabe wird gemäß Anspruch 1 bei einer Vorrichtung der eingangs genannten Art erfindungsgemäß dadurch gelöst, dass die mindestens eine Strömungsberuhigungseinrichtung eine Strömungseintrittsfläche aufweist, welche in Messfluidströmungsrichtung gesehen vor einer fluidwirksamen Verbindung der mindestens einen Druckmesseinrichtung mit dem Strömungskanal angeordnet ist, und dass die mindestens eine Strömungsberuhigungseinrichtung eine Strömungsaustrittsfläche aufweist, welche in Messfluidströmungsrichtung gesehen hinter der fluidwirksamen Verbindung der mindestens einen Druckmesseinrichtung mit dem Strömungskanal angeordnet ist.

Die Strömungsberuhigungseinrichtung ermöglicht es, eine Messfluidströmung des Messfluids hinsichtlich mindestens eines Parameters der Messfluidströmung zu beruhigen.

Im Rahmen der vorliegenden Erfindung wird unter einer Beruhigung einer Messfluidströmung verstanden, dass mindestens ein Parameter der Messfluidströmung vergleichmäßigt wird. Eine Vergleichmäßigung bezieht sich auf Parameterwerte einer Messfluidströmung, welche über einen Strömungsquerschnitt des Strömungskanals lokal verteilt sind und/oder auf zeitlich einander folgende, an einem bestimmten Ort des Strömungskanals anliegende Parameterwerte.

Die Parameterwerte der Messfluidströmung sind insbesondere der Messfluiddruck und/oder die Messfluidströmungsgeschwindigkeit und/oder die Messfluidströmungsrichtungsverteilung. Die Strömungsberuhigungseinrichtung ermöglicht es, dass Parameter des Messfluids, welche zur Geometriemessung eines Werkstücks gemessen werden, insbesondere Messfluiddrücke, nicht oder nur sehr geringfügig schwanken. Hierdurch verbessert sich die Messgenauigkeit und auch die Messgeschwindigkeit.

Darüber hinaus hat die mindestens eine Strömungsberuhigungseinrichtung den Vorteil, dass eine Messfluidströmung, welche einer Messdüse zugeführt wird, beruhigt werden kann. Auch dies führt zu einer Verbesserung der Genauigkeit der Geometriemessung eines Werkstücks.

Die Vorrichtung umfasst mindestens eine erste Druckmesseinrichtung zum Messen eines in Messfluidströmungsrichtung gesehen vor der Düse anliegenden ersten Messfluiddrucks. Dies ermöglicht es, einen Versorgungsdruck des Messfluids, welcher vor der Düse anliegt, zu messen. Die Vorrichtung umfasst ferner mindestens eine zweite Druckmesseinrichtung zum Messen eines in Messfluidströmungsrichtung gesehenen hinter der Düse anliegenden zweiten Messfluiddrucks. Dies ermöglicht es, einen Messfluiddruck zu erfassen, weicher zwischen der in dem Gehäuse angeordneten Düse und einer nachgeschalteten Messdüse anliegt. Ferner ist es bevorzugt, dass die Vorrichtung mindestens eine Druckmesseinrichtung zum Messen eines über der Düse anliegenden Messfluiddifferenzdrucks umfasst. Die mit Hilfe der ersten Druckmesseinrichtung und/oder der zweiten Druckmesseinrichtung und/oder der Druckmesseinrichtung zum Messen eines über der Düse anliegenden Messfluiddifferenzdrucks gemessenen Werte werden herangezogen, um mit Hilfe von Zuordnungsfunktionen die Geometrie eines Werkstücks zu bestimmen. Besonders bevorzugt ist es, dass die mindestens eine Strömungsberuhigungseinrichtung eine Strömungseintrittsfläche aufweist, welche in Messfluidströmungsrichtung gesehen vor einer fluidwirksamen Verbindung der mindestens einen Druckmesseinrichtung mit dem Strömungskanal angeordnet ist. Dies ermöglicht es, dass das Messfluid zunächst zumindest einen Abschnitt der Strömungsberuhigungseinrichtung durchströmt, hierdurch beruhigt wird und dann mit Hilfe der mindestens einen Druckmesseinrichtung der Druck des beruhigten Messfluidstroms erfasst werden kann. Ferner ist es bevorzugt, dass die mindestens eine Strömungsberuhigungseinrichtung eine Strömungsaustrittsfläche aufweist, welche in Messfluidströmungsrichtung gesehen hinter einer fluidwirksamen Verbindung der mindestens einen Druckmesseinrichtung mit dem Strömungskanal angeordnet ist. Dies ermöglicht eine optimale Nutzung des Volumens des Strömungskanals für eine Beruhigung der Messfluidströmung. Darüber hinaus wird eine einfache Anordenbarkeit der mindestens einen Druckmesseinrichtung an dem Gehäuse der Vorrichtung ermöglicht, sodass eine kompakte Vorrichtung geschaffen werden kann.

Eine besonders bevorzugte Ausführungsform der Erfindung sieht vor, dass die Vorrichtung mindestens eine erste Strömungsberuhigungseinrichtung und mindestens eine zweite Strömungsberuhigungseinrichtung umfasst. Die erste Strömungsberuhigungseinrichtung ist in Messfluidströmungsrichtung gesehen vor der Düse angeordnet. Die zweite Strömungsberuhigungseinrichtung ist in Messfluidströmungsrichtung gesehen hinter der Düse angeordnet. Auf diese Weise kann der Düse ein mittels der ersten Strömungsberuhigungseinrichtung beruhigter Messfluidstrom zugeführt werden. Im Anschluss an die Durchströmung der Düse kann das Messfluid erneut mittels der zweiten Strömungsberuhigungseinrichtung beruhigt werden, sodass eine dem Gehäuse nachgeschaltete Messdüse mit einer beruhigten Messfluidströmung versorgt werden kann.

Besonders bevorzugt ist es, wenn die mindestens eine Strömungsberuhigungseinrichtung in dem Strömungskanal angeordnet ist. Dies ermöglicht den Aufbau einer kompakten Vorrichtung und die Beruhigung einer Messfluidströmung in räumlicher Nähe zu der in dem Gehäuse angeordneten Düse. Günstig ist es, wenn die mindestens eine Strömungsberuhigungseinrichtung einen wirksamen Strömungsquerschnitt aufweist, welcher kleiner ist als ein Querschnitt, welcher durch eine Begrenzung des Strömungskanals definiert ist. Unter einem wirksamen Strömungsquerschnitt der Strömungsberuhigungseinrichtung wird ein Querschnitt verstanden, welcher in Messfluidströmungsrichtung für das Messfluid durchlässig ist. Dieser Querschnitt ist kleiner als ein durch die Strömungskanalbegrenzung definierter Querschnitt.

In vorteilhafter Weise umfasst die mindestens eine Strömungsberuhigungseinrichtung mindestens einen Durchströmungskörper. Ein solcher Durchströmungskörper kann in einfacher Weise in dem Strömungskanal angeordnet werden.

Besonders bevorzugt ist es, wenn der mindestens eine Durchströmungskörper porös ist. Ein solcher Durchströmungskörper ermöglicht es, das Messfluid unter Durchströmung des Durchströmungskörpers durch den Strömungskanal zu leiten und dabei einen durch den Durchströmungskörper bewirkten Druckverlust zu minimieren.

Wenn nachstehend von der Porosität eines Durchströmungskörpers die Rede ist, ist hiermit der Anteil eines Porenvolumens am Gesamtvolumen des Durchströmungskörpers gemeint.

Bevorzugt ist es, wenn die Porosität des mindestens einen Durchströmungskörpers mindestens ungefähr 15% beträgt. Auf diese Weise steht ein ausreichender Volumenanteil des Durchströmungskörpers für eine Durchströmung mit dem Messfluid zur Verfügung.

Ferner ist es bevorzugt, wenn die Porosität des mindestens einen Durchströmungskörpers höchstens ungefähr 50% beträgt. Hierdurch kann eine ausreichende Beruhigung der Messfluidströmung erreicht werden.

Nach einer besonders bevorzugten Ausführungsform der Erfindung ist vorgesehen, dass die erste Strömungsberuhigungseinrichtung mindestens einen ersten porösen Durchströmungskörper umfasst, dass die zweite Strömungsberuhigungseinrichtung mindestens einen zweiten porösen Durchströmungskörper umfasst und das der erste Durchströmungskörper eine höhere Porosität aufweist als der zweite Durchströmungskörper. Auf diese Weise kann ein vor Durchströmung der Düse unter Durchströmung des ersten Durchströmungskörpers auftretender Druckverlust minimiert werden. Außerdem kann der Messfluidstrom, welcher einer Messdüse zugeführt wird, optimal beruhigt werden.

Vorzugsweise ist die mindestens eine Strömungsberuhigungseinrichtung aus einem Sintermaterial hergestellt. Ein solches Material ermöglicht die Herstellung eines formstabilen porösen Durchströmungskörpers.

Insbesondere ist es bevorzugt, wenn die mindestens eine Strömungsberuhigungseinrichtung aus einem Sintermetall hergestellt ist. Dies ermöglicht die Herstellung einer robusten Strömungsberuhigungseinrichtung.

Nach einer weiteren vorteilhaften Ausführungsform der Erfindung ist die mindestens eine Strömungsberuhigungseinrichtung aus einem pulverförmigen Ausgangsmaterial hergestellt. Auf diese Weise kann eine Porosität eines Durchströmungskörpers in einfacher Weise eingestellt werden.

Bevorzugt ist es, wenn das pulverförmige Ausgangsmaterial Pulverteilchen enthält, welche einen Durchmesser von mindestens ungefähr 0,1 mm aufweisen, insbesondere von mindestens ungefähr 0,3 mm aufweisen.

Ferner ist es bevorzugt, wenn das pulverförmige Ausgangsmaterial Pulverteilchen enthält, welche einen Durchmesser von höchstens ungefähr 1,5 mm, insbesondere von höchstens ungefähr 1 mm aufweisen.

Die genannten Pulverteilchengrößen ermöglichen eine einfache Herstellbarkeit eines porösen Durchströmungskörpers.

Besonders bevorzugt ist es, wenn die erste Strömungsberuhigungseinrichtung aus einem Ausgangsmaterial hergestellt ist, dessen Pulverteilchen einen größeren Durchmesser aufweisen als die Pulverteilchen eines Ausgangsmaterials, aus welchem die zweite Strömungsberuhigungseinrichtung hergestellt ist. Hierdurch kann ein über der ersten Strömungsberuhigungseinrichtung anliegender Druckverlust minimiert werden und gleichzeitig ein optimal beruhigter Messfluidstrom für eine Messdüse bereitgestellt werden.

In vorteilhafter Weise umfasst die mindestens eine Strömungsberuhigseinrichtung eine Vielzahl von fluidwirksam miteinander verbundenen Hohlräumen. Dies ermöglicht eine einfache Bereitstellung eines Strömungswegs für das Messfluid durch die Strömungsberuhigungseinrichtung hindurch.

Günstig ist es, wenn die Hohlräume einen Durchmesser von mindestens ungefähr 50 µm aufweisen. Hierdurch kann ein über einer Strömungsberuhigungseinrichtung anliegender Druckverlust minimiert werden.

Ferner ist es bevorzugt, wenn die Hohlräume einen Durchmesser von höchstens ungefähr 300 µm aufweisen. Auf diese Weise ist eine ausreichende Beruhigung einer Messfluidströmung gewährleistet.

Besonders bevorzugt ist es, wenn die erste Strömungsberuhigungseinrichtung und die zweite Strömungsberuhigungseinrichtung jeweils eine Vielzahl von fluidwirksam miteinander verbundenen Hohlräumen aufweisen, und wenn die Hohlräume der ersten Strömungsberuhigungseinrichtung einen größeren Durchmesser aufweisen als die Hohlräume der zweiten Strömungsberuhigungseinrichtung. Hierdurch kann erreicht werden, dass ein über der ersten Strömungsberuhigungseinrichtung anliegender Druckverlust minimiert wird und gleichzeitig eine besonders gut beruhigte Messfluidströmung einer Messdüse zuführbar ist.

Günstig ist es, wenn die mindestens eine Strömungsberuhigungseinrichtung eine sich zumindest annähernd rotationssymmetrisch zu einer Strömungskanalachse des Strömungskanals erstreckende Strömungseintrittsfläche aufweist. Dies ermöglicht es, eine Messfluidströmung rotationssymmetrisch zu der Strömungskanalachse in eine Strömungsberuhigungseinrichtung einzuleiten, sodass eine rotationssymmetrische Beruhigung der Messfluidströmung gewährleistet ist.

Insbesondere ist es bevorzugt, wenn sich die Strömungseintrittsfläche zumindest annähernd senkrecht zu der Strömungskanalachse erstreckt. Hierdurch kann ein gleichmäßig ausgebildetes Strömungsprofil der Messfluidströmung erzeugt werden.

Vorzugsweise ist die Strömungseintrittsfläche an oder benachbart zu einem Strömungskanaleingang des Strömungskanals angeordnet. Dies ermöglicht es bei einer in Messfluidströmungsrichtung gesehen vor der Düse angeordneten Strömungsberuhigungseinrichtung, einen Messfluidstrom bereits mit oder kurz nach Eintritt in den Strömungskanal zu beruhigen.

Ferner ist es bevorzugt, wenn die Strömungseintrittsfläche an oder benachbart zu einem Düsenausgang der Düse angeordnet ist. Dies ermöglicht es bei einer Strömungsberuhigungseinrichtung, welche in Messfluidströmungsrichtung gesehen hinter der Düse angeordnet ist, den Messfluidstrom unmittelbar nach Austritt aus der Düse zu beruhigen.

Ferner ist es vorteilhaft, wenn die mindestens eine Strömungsberuhigungseinrichtung eine sich zumindest annähernd rotationssymmetrisch zu einer Strömungskanalachse des Strömungskanals erstreckende Strömungsaustrittsfläche aufweist. Auf diese Weise wird erreicht, dass ein mit Hilfe der Strömungsberuhigungseinrichtung beruhigter Messfluidstrom in gleichmäßiger Weise aus der Strömungsberuhigungseinrichtung austreten kann.

Eine besonders vorteilhafte Auskopplung eines beruhigten Messfluidstroms aus einer Strömungsberuhigungseinrichtung ergibt sich, wenn sich die Strömungsaustrittsfläche zumindest annähernd senkrecht zu der Strömungskanalachse erstreckt.

Für eine in Messfluidströmungsrichtung gesehen vor der Düse angeordnete Strömungsberuhigungseinrichtung ist es vorteilhaft, wenn die Strömungsaustrittsfläche an oder benachbart zu einem Düseneingang der Düse angeordnet ist. Auf diese Weise kann ein beruhigter Messfluidstrom der Düse unmittelbar zugeführt werden.

Für eine in Messfluidströmungsrichtung gesehen hinter der Düse angeordnete Strömungsberuhigungseinrichtung ist es vorteilhaft, wenn die Strömungsaustrittsfläche an oder benachbart zu einem Strömungskanalausgang des Strömungskanals angeordnet ist. Dies ermöglicht eine optimale Nutzung des für eine Beruhigung eines Messfluidstroms in Messfluldströmungsrichtung gesehen hinter der Düse zur Verfügung stehenden Volumens.des Strömungskanals.

Nach einer Ausführungsform der Erfindung ist die mindestens eine Strömungsberuhigungseinrichtung in den Strömungskanal eingepresst. Dies ermöglicht eine besonders einfache Befestigung der Strömungsberuhigungseinrichtung. in dem Strömungskanal.

Nach einer weiteren vorteilhaften Ausführungsform der Erfindung ist mindestens eine Befestigungseinrichtung zur Befestigung der mindestens einen Strömungsberuhigungseinrichtung an oder in dem Strömungskanal vorgesehen. Auch hierdurch ist eine einfache Festlegung der Strömungsberuhigungseinrichtung an oder in dem Strömungskanal ermöglicht.

Vorzugsweise ist mittels der mindestens einen Befestigungseinrichtung die Position der mindestens einen Strömungsberuhigungseinrichtung entlang einer Strömungskanalachse des Strömungskanals definiert. Hierdurch wird erreicht, dass die Beruhigung der Messfluidströmung unabhängig von der Raumlage des Gehäuses der Vorrichtung erfolgen kann.

Bevorzugt ist es, wenn die mindestens eine Befestigungseinrichtung von dem Messfluid durchströmbar ist. Auf diese Weise kann ein gegebenenfalls über der Befestigungseinrichtung anliegender Druckverlust minimiert werden.

Besonders bevorzugt ist es, wenn die mindestens eine Befestigungseinrichtung mindestens eine Befestigungshülse umfasst. Hierdurch kann eine besonders einfache und funktionssichere Befestigungseinrichtung bereitgestellt werden.

Bevorzugt ist es ferner, wenn die mindestens eine Befestigungshülse in den Strömungskanal eingepresst ist. Hierdurch kann die Befestigungshülse selbst an einer Begrenzung des Strömungskanals festgelegt werden. Mittels einer solchen Befestigungshülse kann ein Anschlag gebildet werden, welcher die Position der mindestens einen Strömungsberuhigungseinrichtung entlang einer Strömungskanalachse des Strömungskanals vorgibt.

Die Erfindung betrifft ferner ein Verfahren zur Geometriemessung an einem Werkstück, wobei eine in einem Strömungskanal eines Gehäuses angeordnete Düse in einer Messfluidströmungsvorrichtung mit einem Messfluid durchströmt wird und wobei das Werkstück mit dem Messfluid beaufschlagt wird, wobei in Messfluidströmungsrichtung gesehen vor und/oder hinter der Düse zumindest eine Teilmenge der Messfluidströmung beruhigt wird, wobei ein erster Messfluiddruck, welcher in Messfluidströmungsrichtung gesehen vor der Düse anliegt, und/oder ein zweiter Messfluiddruck, welcher in Messfluidströmungsrichtung gesehen hinter der Düse anliegt, und/oder ein Messfluiddifferenzdruck gemessen wird, welcher über der Düse anliegt.

Der Erfindung liegt die weitere Aufgabe zu Grunde, ein Verfahren zur Geometriemessung an einem Werkstück vorzuschlagen, welches besonders genau ist. Diese Aufgabe wird gemäß Anspruch 8 bei einem vorstehend genannten Verfahren erfindungsgemäß dadurch gelöst, dass das Messfluid durch mindestens einen Abschnitt einer Strömungsberuhigungseinrichtung geleitet wird und anschließend einer Druckmesseinrichtung zum Messen eines Messfluiddrucks oder eines Messfluiddifferenzdrucks zugeführt wird und anschließend durch mindestens einen Abschnitt einer Strömungsberuhigungseinrichtung geleitet wird.

Die Vorteile und besonderen Ausgestaltungen des erfindungsgemäßen Verfahrens sind bereits vorstehend im Zusammenhang mit den Vorteilen und den besonderen Ausgestaltungen der erfindungsgemäßen Vorrichtung erläutert worden. Daher wird bezüglich der Vorteile und Ausgestaltungen des erfindungsgemäßen Verfahrens auf die vorstehende Beschreibung der erfindungsgemäßen Vorrichtung Bezug genommen.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine perspektivische Ansicht einer Ausführungsform einer Vorrichtung zur Geometriemessung an einem Werkstück;
- Fig. 2: eine Vorderansicht der Vorrichtung gemäß Figur 1;
- Fig. 3: eine Rückansicht der Vorrichtung gemäß Figur 1;
- Fig. 4: eine erste Seitenansicht der Vorrichtung gemäß Figur 1;
- Fig. 5: eine Draufsicht der Vorrichtung gemäß Figur 1;
- Fig. 6: eine zweite Seitenansicht der Vorrichtung gemäß Figur 1;
- Fig. 7: eine Untersicht der Vorrichtung gemäß Figur 1;
- Fi.g. 8: eine Ansicht längs der Linie VIII- VIII in Figur 5 der Vorrichtung gemäß Figur 1 vor Anordnung mindestens einer Strömungsberuhigungseinrichtung in einem Strömungskanal; und
- Fig. 9: eine der Figur 8 entsprechende Ansicht mit in dem Strömungskanal der Vorrichtung gemäß Figur 1 angeordneten Strömungsberuhigungseinrichtungen.

Gleiche oder funktional äquivalente Elemente sind in allen Figuren mit densel-ben Bezugszeichen bezeichnet.

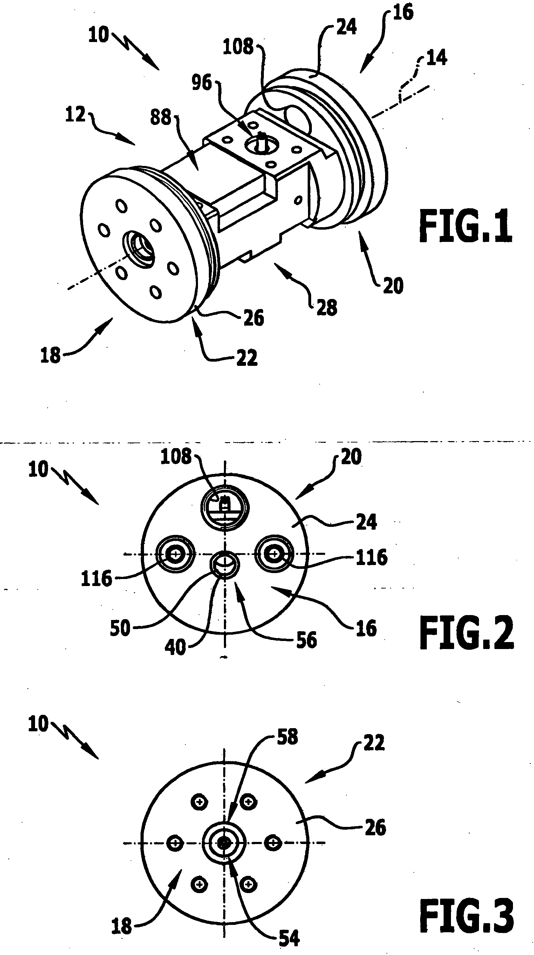

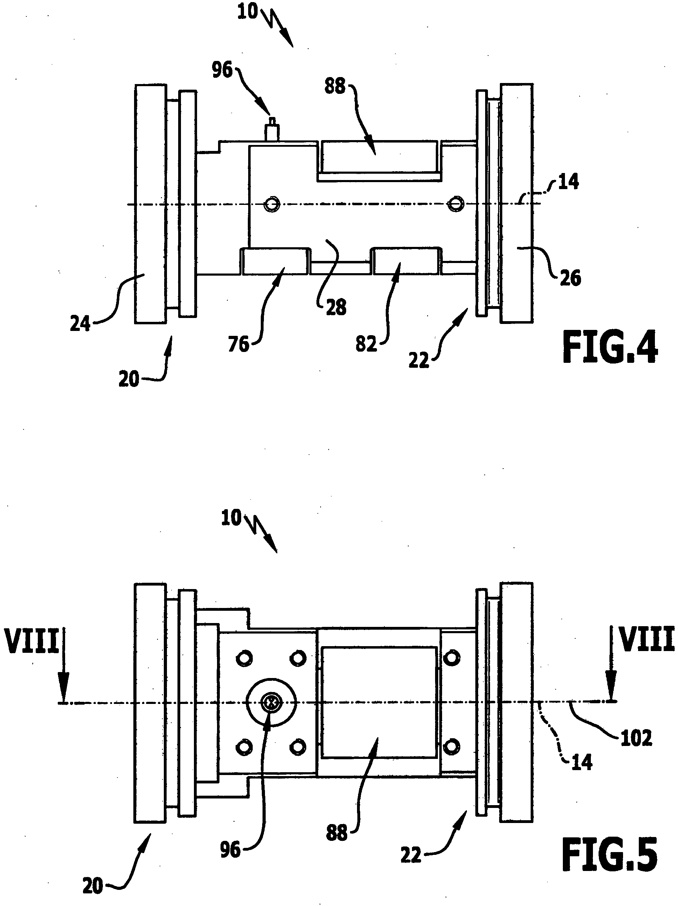

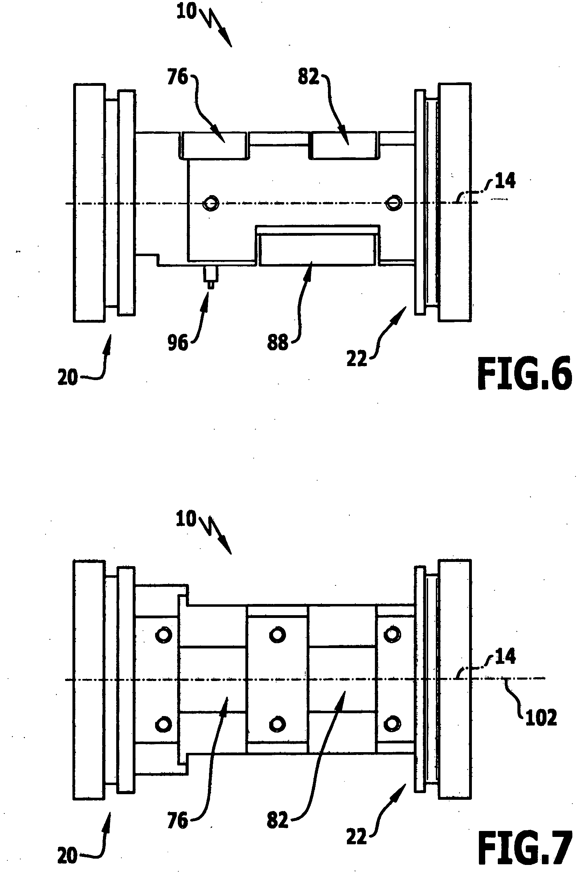

Eine Ausführungsform einer mit 10 bezeichneten Vorrichtung zur Geometriemessung an einem Werkstück ist in den Figuren 1 bis 9 dargestellt.

Die Vorrichtung 10 weist ein Gehäuse 12 auf, welches sich entlang einer Gehäuseachse 14 erstreckt. Entlang der Gehäuseachse 14 gesehen erstreckt sich die Vorrichtung 10 zwischen einer Vorderseite 16 (vgl. Fig. 2) und einer Rückseite 18 (vgl. Fig. 3).

Das Gehäuse 12 weist ein erstes Gehäuseteil 20 und ein zweites Gehäuseteil 22 auf. Das erste Gehäuseteil 20 umfasst ein im Wesentlichen zylindrisches, insbesondere scheibenförmiges Gehäuseelement 24, welches die Vorderseite 16 des Gehäuses 12 ausbildet. Das zweite Gehäuseteil 22 umfasst ein im Wesentlichen zylindrisches, insbesondere scheibenförmiges Gehäuseelement 26, welches die Rückseite 18 des Gehäuses 12 ausbildet.

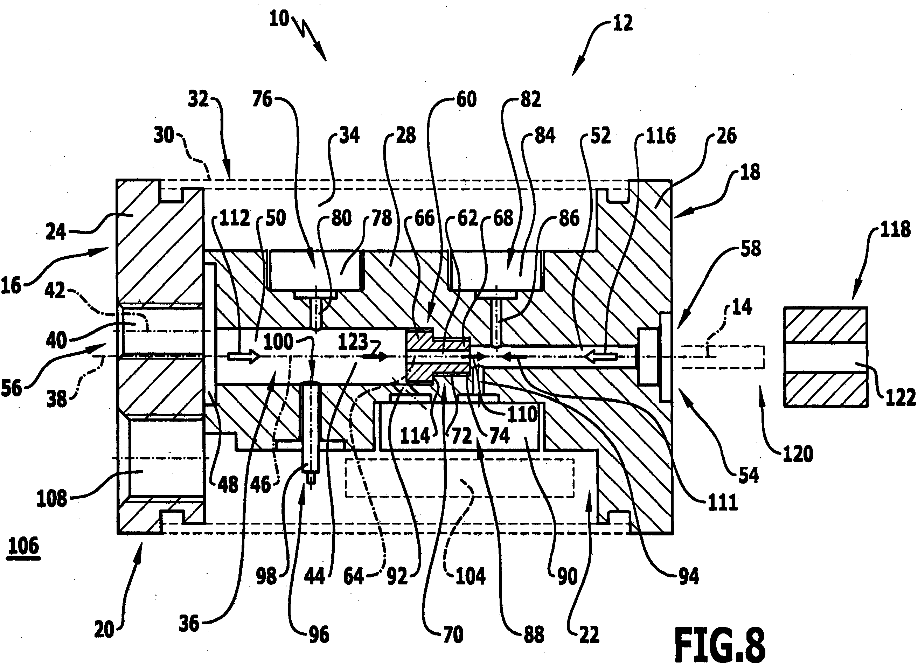

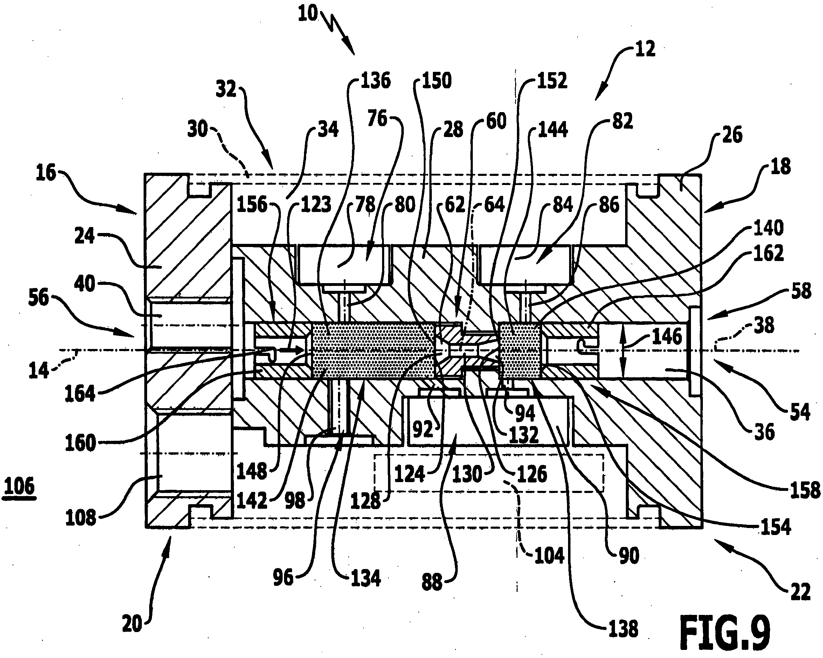

Das zweite Gehäuseteil 22 umfasst ferner ein zentrales Gehäuseelement 28. Das zentrale Gehäuseelement 28 und das Gehäuseelement 26 sind miteinander einstückig ausgebildet. Das zentrale Gehäuseelement 28 weist quer zu der Gehäuseachse 14 gesehen einen kleineren Querschnitt auf als die Gehäuseelemente 24 und 26. Zwischen den Gehäuseelementen 24 und 26 ist ein hohlzylindrisches Gehäuseelement 30 angeordnet, welches in den Figuren 8 und 9 mit gestrichelten Linien angedeutet ist. Das Gehäuseelement 30 bildet eine zylindrische Außenwand 32 des Gehäuses 12 aus. Die Vorrichtung 10 umfasst einen ringförmigen Zwischenraum 34, der bezogen auf die Gehäuseachse 14 nach radial außen durch das Gehäuseelement 30 und nach radial innen durch das zentrale Gehäuseelement 28 begrenzt ist.

Die Vorrichtung 10 umfasst einen sich zwischen der Vorderseite 16 und der Rückseite 18 des Gehäuses 12 erstreckenden Strömungskanal 36. Der Strömungskanal 36 erstreckt sich entlang einer Strömungskanalachse 38, welche vorzugsweise mit der zentralen Gehäuseachse 14 des Gehäuses 12 fluchtet. Das Gehäuseelement 24 umfasst einen sich zwischen der Vorderseite 16 und dem zentralen Gehäuseelement 28 erstreckenden ersten Teilabschnitt 40 des Strömungskanals 36. Der erste Teilabschnitt 40 weist eine Teilabschnittsachse 42 auf. Das zweite Gehäuseteil 22 weist einen zweiten Teilabschnitt 44 des Strömungskanals 36 auf und umfasst eine Teilabschnittsachse 46. Die Teilabschnittsachsen 42 und 46 sind geringfügig zueinander beabstandet oder fluchten miteinander.

Der zweite Teilabschnitt 44 des Strömungskanals 36 umfasst einen benachbart zu dem Gehäuseelement 24 angeordneten Verteilerraum 48 sowie einen sich hieran anschließenden Strömungskanalabschnitt 50. Der Strömungskanalabschnitt 50 mündet an seinem dem Verteilerraum 48 abgewandten Ende an einem Strömungskanalabschnitt 52. Der Strömungskanalabschnitt 52 endet auf Höhe der Rückseite 18 des Gehäuses 12 an einem im Querschnitt erweiterten Endabschnitt 54.

Der erste Teilabschnitt 40 bildet einen Strömungskanaleingang 56 des Strömungskanals 36; der Endabschnitt 54 bildet einen Strömungskanalausgang 58 des Strömungskanals 36.

In dem Strömungskanal 36 ist eine Düse 60 angeordnet, welche einen Düsenkanal 62 mit einer Düsenkanalachse 64 aufweist. Vorzugsweise fluchtet die Düsenkanalachse 64 mit der Strömungskanalachse 38 des Strömungskanals 36.

Die Düse 60 weist ein Kopfteil 66 sowie ein einstückig mit diesem ausgebildetes Fußteil 68 auf. Der Querschnitt des Kopfteils 66 ist größer als der des Fußteils 68. Das Kopfteil 66 weist einen geringfügig kleineren Querschnitt auf als der Strömungskanalabschnitt 50.

Zur Verbindung der Düse 60 mit dem Gehäuse 12 umfasst die Vorrichtung 10 eine Verbindungseinrichtung 70. Diese umfasst einen ersten Verbindungsabschnitt 72, welcher an dem Gehäuse 12 angeordnet und insbesondere in Form eines Innengewindes ausgebildet ist. Die Verbindungseinrichtung 70 umfasst ferner einen zweiten Verbindungsabschnitt 74, welcher an der Düse 60 vorgesehen ist und vorzugsweise in Form eines Außengewindes ausgebildet ist.

Die Düse 60 weist einen Düseneingang 124 und einen Düsenausgang 126 auf.

Der Düseneingang 124 begrenzt einen eingangsseitigen Düsenabschnitt 128, in welchem sich der Düsenkanal 62 entlang der Düsenkanalachse 64 gesehen in Richtung auf den Düsenausgang 126 verengt. Der erste Düsenabschnitt 128 grenzt an einen mittleren Düsenabschnitt 130, in welchem der Düsenkanal 62 den kleinsten Düsenquerschnitt aufweist. Der mittlere Düsenabschnitt 130 grenzt an einen ausgangsseitigen Düsenabschnitt 132, in welchem sich der Düsenkanal 62 entlang der Düsenkanalachse 64 gesehen in Richtung auf den Düsenausgang 126 erweitert.

Die Vorrichtung 10 weist eine Vielzahl von Messeinrichtungen auf, welche fluidwirksam mit dem Strömungskanal 36 verbunden sind und dazu dienen, Parameter eines den Strömungskanal 36 durchströmenden Messfluids zu messen.

Die Vorrichtung 10 umfasst eine erste Druckmesseinrichtung 76 in Form eines ersten Drucksensors 78. Der erste Drucksensor 78 steht über eine Leitung 80 in fluidwirksamer Verbindung mit dem Strömungskanalabschnitt 50 des Strömungskanals 36 stromaufwärts der Düse 60.

Die Vorrichtung 10 umfasst ferner eine zweite Druckmesseinrichtung 82 in Form eines zweiten Drucksensors 84. Der zweite Drucksensor 84 ist über eine Leitung 86 fluidwirksam mit dem Strömungskanatabschnitt 52 des Strömungskanals 36 stromabwärts der Düse 60 verbunden.

Die Vorrichtung 10 umfasst ferner eine Druckmesseinrichtung 88 in Form eines Differenzdrucksensors 90. Der Differenzdrucksensor 90 ist über eine erste Leitung 92 mit dem Strömungskanalabschnitt 50 stromaufwärts der Düse 60 und über eine zweite Leitung 94 mit dem Strömungskanalabschnitt 52 stromabwärts der Düse 60 fluidwirksam verbunden.

Ferner umfasst die Vorrichtung 10 eine Temperaturmesseinrichtung 96 in Form eines Temperatursensors 98. Der Temperatursensor 98 weist eine in Richtung auf den Strömungskanalabschnitt 50 weisende Temperaturmessfläche 100 auf.

Die Messeinrichtungen 76, 82, 88 und 96 sind innerhalb einer gemeinsamen ersten Gehäuseebene 102 angeordnet. Vorzugsweise erstreckt sich die Gehäuseachse 14 innerhalb der Gehäuseebene 102. Insbesondere ist es bevorzugt, wenn die erste Druckmesseinrichtung 76 und die zweite Druckmesseinrichtung 82 bezogen auf den Strömungskanal 36 auf der gegenüberliegenden Seite der Differenzdruckmessseinrichtung 88 angeordnet sind. Ferner ist es bevorzugt, wenn die Temperaturmesseinrichtung 96 innerhalb der Gehäuseebene 102 bezogen auf den Strömungskanal 36 auf derselben Seite wie die Differenzdruckmesseinrichtung 88 angeordnet ist.

Die Messeinrichtungen 76, 82, 88 und 96 sind mit einer in den Figuren 8 und 9 in gestrichelten Linien angedeuteten Auswerteeinheit 104 verbunden. Die Auswerteeinheit 104 ist vorzugsweise in dem Zwischenraum 34 des Gehäuses 12 angeordnet. Aus Übersichtsgründen sind die Datenleitungen, welche die Messeinrichtungen 76, 82, 88 und 96 mit der Auswerteeinheit 104 verbinden, in der Zeichnung nicht dargestellt. Die Auswerteeinheit 104 kann drahtlos oder drahtgebunden mit weiteren datentechnischen Einrichtungen verbunden sein, welche beispielsweise in der Umgebung 106 der Vorrichtung 10 angeordnet sind. Für eine drahtgebundene Verbindung zwischen der Auswerteeinheit 104 und einer weiteren datentechnischen Einrichtung umfasst das erste Gehäuseteil 20 einen Kabelkanal 108 zur Verbindung des Zwischenraums 34 des Gehäuses 12 mit der Umgebung 106.

Die Düse 60 ist vorzugsweise eine standardisierte Düse, welche beispielsweise für eine Verwendung bei einem Vergaser bestimmt ist und bei einer solchen Verwendung in einer ersten Durchströmungsrichtung 110 mit Luft und/oder Kraftstoff durchströmt wird. Diese Durchströmungsrichtung 110 ist zu einer zweiten Durchströmungsrichtung 111 der Düse 60 entgegengerichtet.

Der Strömungskanal 36 ist mit einem Messfluid, insbesondere mit Druckluft, durchströmbar. Zur Beruhigung des Messfluidstroms umfasst die Vorrichtung 10 mindestens eine Strömungsberuhigungseinrichtung.

Die Vorrichtung 10 weist eine erste Strömungsberuhigungseinrichtung 134 auf, welche vorzugsweise in Form eines porösen Durchströmungskörpers 136 gebildet ist. Die erste Strömungsberuhigungseinrichtung 134 ist in einer Messfluidströmungsrichtung 123 gesehen vor der Düse 60 angeordnet.

Die Vorrichtung 10 weist ferner eine zweite Strömungsberuhigungseinrichtung 138 auf, welche vorzugsweise in Form eines porösen Durchströmungskörpers 140 gebildet ist. Die zweite Strömungsberuhigungseinrichtung 138 ist in Messfluidströmungsrichtung 123 gesehen hinter der Düse 60 angeordnet.

Die Strömungsberuhigungseinrichtungen 138 und 140 sind insbesondere aus einem Sintermetall hergestellt und weisen jeweils eine Vielzahl von fluidwirksam miteinander verbundenen Hohlräumen 142 bzw. 144 auf, welche in Figur 9 mit Punkten angedeutet sind.

Vorteilhaft ist es, wenn die erste Strömungsberuhigungseinrichtung aus Pulverteilchen hergestellt ist, welche einen Durchmesser von 0,63 mm bis 1 mm aufweisen. Bevorzugt ist es ferner, wenn die Hohlräume 142 der ersten Strömungsberuhigungseinrichtung 134 einen maximalen Durchmesser von 0,2 mm aufweisen.

Die zweite Strömungsberuhigungseinrichtung 138 ist vorzugsweise aus einem Ausgangsmaterial hergestellt, welches Pulverteilchen mit einem Durchmesser von 0,315 mm bis 0,63 mm aufweist. Ferner ist es bevorzugt, wenn die Hohlräume 144 der zweiten Strömungsberuhigungseinrichtung 138 einen maximalen Durchmesser von 0,08 mm aufweisen.

Die Strömungsberuhigungseinrichtungen 134 und 138 sind vorzugsweise zylindrisch, insbesondere kreiszylindrisch. Insbesondere sind die Zylindermantelflächen der Strömungsberuhigungseinrichtungen 134 und 138 hinsichtlich ihrer Geometrie der Geometrie der Begrenzung des Strömungskanals 36 angepasst.

Der Strömungskanal 36 weist einen Strömungsquerschnitt 146 auf. Mit Hilfe der Strömungsberuhigungseinrichtungen 134 und 138 wird der längs der Strömungskanalachse 38 anliegende wirksame Strömungsquerschnitt verkleinert. Die auf verschiedenen Höhen der Strömungsberuhigungseinrichtungen 134 und 138 anliegenden Strömungsquerschnitte ergeben sich durch die Summe der in einem solchen Querschnitt anliegenden Querschnitte der Hohlräume 142 bzw. 144.

Die erste Strömungsberuhigungseinrichtung 134 weist eine insbesondere kreisförmige Strömungseintrittfläche 148 auf, welche sich vorzugsweise senkrecht zu der Strömungskanalachse 38 erstreckt. Ferner weist die erste Strömungsberuhigungseinrichtung 134 eine Strömungsaustrittsfläche 150 auf. Die Strömungsaustrittsfläche 150 ist insbesondere kreisförmig ausgebildet und erstreckt sind vorzugsweise senkrecht zu der Strömungskanalachse 38.

Die zweite Strömungsberuhigungseinrichtung weist eine Strömungseintrittsfläche 152 auf sowie eine Strömungsaustrittsfläche 154. Die Flächen 152 und 154 sind vorzugsweise senkrecht zu der Strömungskanalachse 38 orientiert und sind insbesondere kreisförmig.

Die Strömungseintrittsfläche 148 der ersten Strömungsberuhigungseinrichtung 134 ist in Messfluidströmungsrichtung 123 gesehen vor der fluidwirksamen Verbindung 80 der ersten Druckmesseinrichtung 76 mit dem Strömungskanal 36 angeordnet. Die Strömungsaustrittsfläche 150 der ersten Strömungsberuhigungseinrichtung 134 ist benachbart oder anliegend an den Düseneingang 124 der Düse 60 angeordnet.

Die Strömungseintrittsfläche 152 der zweiten Strömungsberuhigungseinrichtung 138 ist benachbart zu dem Düsenausgang 126 angeordnet und liegt vorzugsweise direkt an dem Düsenausgang 126 an. Die Strömungsaustrittsfläche 154 der zweiten Strömungsberuhigungseinrichtung 138 ist in Messfluidströmungsrichtung 123 gesehen hinter der fluidwirksamen Verbindung 86 der zweiten Druckmesseinrichtung 82 mit dem Strömungskanal 36 angeordnet.

Die erste Strömungsberuhigungseinrichtung 134 ist derart angeordnet, dass die Strömungseintrittsfläche 148 der ersten Strömungsberuhigungseinrichtung 134 in Messfluidströmungsrichtung 123 gesehen vor der ersten fluidwirksamen Verbindung 92 der Druckmesseinrichtung 88 mit dem Strömungskanal 36 angeordnet ist. Ferner ist die Strömungseintrittsfläche 152 der zweiten Strömungsberuhigungseinrichtung 138 in Messfluidströmungsrichtung 123 gesehen vor der zweiten fluidwirksamen Verbindung 94 der Druckmesseinrichtung 88 mit dem Strömungskanal 36 angeordnet.

Zur Befestigung der Strömungsberuhigungseinrichtungen 134 und 138 in dem Strömungskanal 36 kann vorgesehen sein, dass diese in den Strömungskanat 36 eingepresst sind. Alternativ oder ergänzend hierzu kann, wie bei dem in Figur 9 dargestellten Ausführungsbeispiel, mindestens eine der Strömungsberuhigungseinrichtungen 134, 138 mittels einer zusätzlichen Befestigungseinrichtung 156, 158 in dem Strömungskanal 36 befestigt werden.

Die Befestigungseinrichtungen 156, 158 sind insbesondere in Form jeweils einer Befestigungshülse 160, 162 ausgebildet. Die Befestigungseinrichtung 156 ist in den Strömungskanal 36 eingepresst und bildet einen axialen Anschlag für den Durchströmungskörper 136 der ersten Strömungsberuhigungseinrichtung 134.

In entsprechender Weise umfasst die Befestigungseinrichtung 158 eine Befestigungshülse 162, welche in den Strömungskanal 36 eingepresst ist. Die Befestigungshülse 162 bildet einen axialen Anschlag für die zweite Strömungsberuhigungseinrichtung 138.

Die Befestigungshülsen 160 und 162 weisen jeweils einen insbesondere L-förmigen Handhabungsabschnitt 164 auf, mittels welchem die Befestigungshülsen 160, 162 bei Bedarf aus dem Strömungskanal 36 entfernt werden können.

Zur Herstellung der Vorrichtung 10 wird die Düse 60 mit dem Fußteil 68 voran in einer Fügerichtung 112 in den Strömungskanalabschnitt 50 des zweiten Gehäuseteils 22 eingeführt. Die Fügerichtung 112 und die erste Durchströmungsrichtung 110 der Düse 60 sind identisch. Mit Hilfe der Verbindungseinrichtung 70 wird die Düse 60 mit dem zweiten Gehäuseteil 22 verbunden, indem der zweite Verbindungsabschnitt 74 in den ersten Verbindungsabschnitt 72. eingeschraubt wird. Zur Positionierung der Düse 60 entlang der Gehäuseachse 14 weist das zweite Gehäuseteil 22 einen Anschlag 114 auf. In dem fertig gefügten Zustand der Düse 60 mit dem Gehäuse 12 liegt das Kopfteil 66 der Düse 60 an dem Anschlag 114 an.

Bei einer alternativen, in der Zeichnung nicht dargestellten Ausführungsform der Vorrichtung 10 weist der Strömungskanalabschnitt 52 stromabwärts der Düse 60 einen so großen Querschnitt auf, dass sich die Düse 60 in einer zu der ersten Durchströmungsrichtung 110 entgegensetzten Fügerichtung 116 mit dem Gehäuse 12 fügen lässt. Bei dieser Ausführungsform ist es bevorzugt, wenn der an der Düse 60 ausgebildete zweite Verbindungsabschnitt 74 der Verbindungseinrichtung 70 an dem Kopfteil 66 der Düse 60 angeordnet ist.

Nach Montage der Düse 60 in dem zweiten Gehäuseteil 22 der Vorrichtung 10 werden die Strömungsberuhigungseinrichtungen 134 und 138 in den Strömungskanal 36 eingesetzt. Anschließend werden die Befestigungshülsen 160 und 162 in den Strömungskanal 36 eingepresst, sodass die Strömungsberuhigungseinrichtungen 134 und 138 in dem Strömungskanal 36 festgelegt sind. Anschließend werden das erste Gehäuseteil 20 und das zweite Gehäuseteil 22 miteinander verbunden, beispielsweise mit Hilfe mindestens einer Schraubverbindung 116 (vgl. Figur 2).

Die Vorrichtung 10 funktioniert wie folgt.

Zur Vorbereitung der Messung an einem Werkstück 118 (vgl. Fig. 8) wird eine Messdüse 120 fluidwirksam mit dem Strömungskanalausgang 58 des Strömungskanals 36 verbunden. Beispielsweise weist das Werkstück 118 eine Bohrung 122 auf, deren Durchmesser überprüft werden soll. Die Geometrie der Messdüse 120 ist der Geometrie der zu überprüfenden Abmessung eines Werkstücks 118 angepasst. Zur Vorbereitung einer Messung an dem Werkstück 118 wird die Messdüse 120 in die Bohrung 122 eingeführt. Anschließend wird der Strömungskanal 36 mit einem Messfluid beaufschlagt, insbesondere mit Druckluft. Das Messfluid durchströmt den Strömungskanal 36 in der Messfluidströmungsrichtung 123, welche von dem Strömungskanaleingang 56 hin zu dem Strömungskanalausgang 54 des Strömungskanals gerichtet ist und der ersten Durchströmungsrichtung 110 der Düse 60 entspricht. Das Messfluid gelangt über den Strömungskanaleingang 56 in den ersten Teilabschnitt 40 des Strömungskanals 36, durchströmt den Durchströmungskörper 136 der ersten Strömungsberuhigungseinrichtung 134 und gelangt zu der Düse 60. Dort durchströmt das Messfluid den Düsenkanal 62. Nach Austritt aus der Düse 60 durchströmt das Messfluid den Durchströmungskörper 140 der ersten Strömungsberuhigungseinrichtung 138 und gelangt zur dem Strömungskanalausgang 54 und von diesem zur Messdüse 120. Die Messdüse 120 weist Austrittsöffnungen für das Messfluid auf, sodass das Messfluid aus der Messdüse 120 austreten kann. Die Geometrie der Messdüse 120 ist derart auf die zu prüfende Abmessung des Werkstücks 118 abgestimmt, dass ein Spalt entsteht, welcher als Drosselstelle wirkt, an dem ein Druckverlust des Messfluids auftritt.

Die Düse 60 wirkt als weitere Drosselstelle, an welcher ebenfalls ein Druckverlust auftritt. Mittels der Druckmesseinrichtungen 76, 82 und 88 können Drücke stromaufwärts und stromabwärts der Düse 60 gemessen und in Form von Druckmesswerten an die Auswerteeinheit 104 weitergegeben werden. In der Auswerteeinheit 104 oder in einer mit der Auswerteeinheit 104 datentechnisch verbundenen externen Einrichtung sind Zuordnungsfunktionen hinterlegt, welche durch Messung an einem Referenzwerkstück ermittelt werden. Mit Hilfe dieser Zuordnungsfunktionen kann eine Werkstückabmessung an einem zu prüfenden Werkstück 118 bestimmt werden.

In diesen Zuordnungsfunktionen können weitere Parameter hinterlegt sein, welche einen Einfluss auf die Genauigkeit der Messung an einem Werkstück 118 haben. Diese Parameter sind beispielsweise die Temperatur und/oder die Feuchte des Messfluids und/oder die Temperatur der Umgebung 106 der Vorrichtung 10. Um festzustellen, welchen Einfluss die Temperatur und/oder die Feuchte des Messfluids und/oder die Umgebungstemperatur auf eine Messung hat, können Referenzmessungen an einem Referenzwerkstück durchgeführt werden. Während dieser Referenzmessungen wird vorzugsweise jeweils nur einer der genannten Parameter variiert, sodass die Zuordnungsfunktionen um Korrekturfunktionen ergänzt oder diese Korrekturfunktionen in die Zuordnungsfunktionen integriert werden können.

Mit Hilfe der Druckmesseinrichtungen 76, 82 und 88 lassen sich jeweils diesen Einrichtungen zugeordnete Druckmesswerte erfassen. Besonders bevorzugt ist es, wenn mindestens ein Druckmesswert verwendet wird, um eine Messfluidmenge zu bestimmen, welche beispielsweise innerhalb einer vorgebbaren Zeitspanne durch die Vorrichtung 10 hindurchströmt. Diese Messfluidmenge kann mit Hilfe einer durch Messung an einem Referenzwerkstück bestimmten Zuordnungsfunktion in eine Abmessung eines zu prüfenden Werkstücks 118 umgerechnet werden. Vorzugsweise erfolgt die Bestimmung der Messfluidmenge zusätzlich in Abhängigkeit mindestens eines der Parameter Temperatur und/oder Feuchte des Messfluids und/oder Temperatur der Umgebung 106. Die Vorrichtung 10 ermöglicht es darüber hinaus, einen Defekt einer der Druckmesseinrichtungen 76, 82 und/oder 88 feststellen zu können. Hierfür kann eine Abweichung zwischen dem mit Hilfe der Differenzdruckmesseinrichtung 88 gemessenen Differenzdruck einerseits und der Differenz aus dem ersten Druckmesswert und dem zweiten Druckmesswert andererseits ermittelt werden. Übersteigt die ermittelte Abweichung einen vorgebbaren Grenzwert, kann hieraus geschlossen werden, dass mindestens eine der Druckmesseinrichtungen 76, 82, 88 defekt ist und die Vorrichtung 10 ausgetauscht und/oder repariert werden muss.

Die Strömungsberuhigungseinrichtungen 134 und 138 ermöglichen es, dass den Druckmesseinrichtungen 76, 82 und 88 eine beruhigte Messfluidströmung zugeführt werden kann. Dies hat zur Folge, dass die mit Hilfe der genannten Druckmesseinrichtungen erfassten Druckmesswerte weniger stark schwanken, sodass eine genauere Geometriemessung eines Werkstücks 118 ermöglicht ist. Durch die Beruhigung der Messfluidströmung ist es außerdem möglich, die Messung in einer sehr kurzen Zeitspanne durchführen zu können.

Ein weiterer Vorteil der Strömungsberuhigungseinrichtungen 134 und 138 besteht darin, dass der Messdüse 120 ein beruhigter Messfluidstrom zugeführt werden kann. Hierdurch können Schwankungen der Messfluidströmung hinsichtlich seines Drucks und/oder seiner Strömungsgeschwindigkeit und/oder seiner Strömungsrichtungsverteilung verhindert oder zumindest weitestgehend vermieden werden. Auch hierdurch wird die Genauigkeit der Geometriemessung eines Werkstücks 118 erheblich verbessert.

## Patentansprüche

1. Vorrichtung (10) zur Geometriemessung an einem Werkstück, umfassend ein Gehäuse (12) mit einem Strömungskanal (36), in welchem eine Düse (60) zur Durchströmung mit einem Messfluid in einer Messfluidströmungsrichtung (123) angeordnet ist, und mindestens eine Strömungsberuhigungseinrichtung (134, 138), welche in Messfluidströmungsrichtung (123) gesehen vor oder hinter der Düse (60) angeordnet ist, wobei eine erste Druckmesseinrichtung (76) zum Messen eines in Messfluidströmungsrichtung (123) gesehen vor der Düse (60) anliegenden ersten Messfluiddrucks und/oder mindestens eine zweite Druckmesseinrichtung (82) zum Messen eines in Messfluidströmungsrichtung (123) gesehen hinter der Düse (60) anliegenden zweiten Messfluiddrucks und/oder mindestens eine Druckmesseinrichtung (88) zum Messen eines über der Düse (60) anliegenden Messfluiddifferenzdrucks vorgesehen sind, **dadurch gekennzeichnet, dass** die mindestens eine Strömungsberuhigungseinrichtung (134, 138) eine Strömungseintrittsfläche (148, 152) aufweist, welche in Messfluidströmungsrichtung (123) gesehen vor einer fluidwirksamen Verbindung (80, 86, 92, 94) der mindestens einen Druckmesseinrichtung (76, 82, 88) mit dem Strömungskanal (36) angeordnet ist, und dass die mindestens eine Strömungsberuhigungseinrichtung (134, 138) eine Strömungsaustrittsfläche (150, 154) aufweist, welche in Messfluidströmungsrichtung (123) gesehen hinter der fluidwirksamen Verbindung (80, 86, 92, 94) der mindestens einen Druckmesseinrichtung (76, 82, 88) mit dem Strömungskanal (36) angeordnet ist.

2. Vorrichtung (10) nach Anspruch 1, **dadurch gekennzeichnet, dass** die mindestens eine Strömungsberuhigungseinrichtung (134) in Messfluidströmungsrichtung (123) gesehen vor der Düse (60) angeordnet ist und dass deren Strömungsaustrittsfläche (150) an oder benachbart zu einem Düseneingang (124) der Düse (60) angeordnet ist.

3. Vorrichtung (10) nach Anspruch 1 oder 2, **dadurch gekennzeichnet, dass** die mindestens eine Strömungsberuhigungseinrichtung (138) in Messfluidströmungsrichtung (123) gesehen hinter der Düse (60) angeordnet ist und dass deren Strömungseintrittsfläche (152) an oder benachbart zu einem Düsenausgang (126) der Düse (60) angeordnet ist.

4. Vorrichtung (10) nach einem der voranstehenden Ansprüche, **gekennzeichnet durch** mindestens eine erste Strömungsberuhigungseinrichtung (134), welche in Messfluidströmungsrichtung (123) gesehen vor der Düse (60) angeordnet ist, und **durch** mindestens eine zweite Strömungsberuhigungseinrichtung (138), welche in Messfluidströmungsrichtung (123) gesehen hinter der Düse (60) angeordnet ist.

5. Vorrichtung (10) nach Anspruch 4, **dadurch gekennzeichnet, dass** die Strömungsberuhigungseinrichtungen (134, 138) in dem Strömungskanat (36) angeordnet sind.

6. Vorrichtung (10) nach einem der voranstehenden Ansprüche, **dadurch gekennzeichnet, dass** die mindestens eine Strömungsberuhigungseinrichtung (134, 138) mindestens einen Durchströmungskörper (136, 140) umfasst und dass der mindestens eine Durchströmungskörper (136, 140) porös ist.

7. Vorrichtung (10) nach einem Ansprüche 4 bis 6, **dadurch gekennzeichnet, dass** die erste Strömungsberuhigungseinrichtung (134) mindestens einen ersten porösen Durchströmungskörper (136) umfasst, dass die zweite Strömungsberuhigungseinrichtung (138) mindestens einen zweiten porösen Durchströmungskörper (140) umfasst und dass der erste Durchströmungskörper (136) eine höhere Porosität aufweist als der zweite Durchströmungskörper (140).

8. Verfahren zur Geometriemessung an einem Werkstück (118), wobei eine in einem Strömungskanal (36) eines Gehäuses (12) angeordnete Düse (60) in einer Messfluidströmungsrichtung (123) mit einem Messfluid durchströmt wird und wobei das Werkstück (118) mit dem Messfluid beaufschlagt wird, wobei in Messfluidströmungsrichtung (123) gesehen vor und/oder hinter der Düse (60) mittels mindestens einer Strömungsberuhigungseinrichtung (134, 138) zumindest eine Teilmenge der Messfluidströmung beruhigt wird, wobei ein erster Messfluiddruck, welcher in Messfluidströmungsrichtung (123) gesehen vor der Düse (60) anliegt, und/oder ein zweiter Messfluiddruck, welcher in Messfluidströmungsrichtung (123) gesehen hinter der Düse (60) anliegt, und/oder ein Messfluiddifferenzdruck gemessen wird, welcher über der Düse (60) anliegt, **dadurch gekennzeichnet, dass** das Messfluid durch mindestens einen ersten Abschnitt der Strömungsberuhigungseinrichtung (134, 138) geleitet wird, anschließend einer Druckmesseinrichtung (76, 82, 88) zum Messen eines Messfluiddrucks oder eines Messfluiddifferenzdrucks zugeführt wird und anschließend durch mindestens einen zweiten Abschnitt der Strömungsberuhigungseinrichtung (134, 138) geleitet wird.

9. Verfahren nach Anspruch 8, **dadurch gekennzeichnet, dass** die mindestens eine Strömungsberuhigungseinrichtung (134) in Messfluidströmungsrichtung (123) gesehen vor der Düse (60) angeordnet ist und eine Strömungsaustrittsfläche (150) aufweist und dass die Strömungsaustrittsfläche (150) an oder benachbart zu einem Düseneingang (124) der Düse (60) angeordnet wird.

10. Verfahren nach Anspruch 8 oder 9, **dadurch gekennzeichnet, dass** die mindestens eine Strömungsberuhigungseinrichtung (138) in Messfluidströmungsrichtung (123) gesehen hinter der Düse (60) angeordnet ist und eine Strömungseintrittsfläche (152) aufweist und dass die Strömungseintrittsfläche (152) an oder benachbart zu einem Düsenausgang (126) der Düse (60) angeordnet wird.

11. Verfahren nach einem der Ansprüche 8 bis 10, **dadurch gekennzeichnet, dass** das Messfluid durch eine erste Strömungsberuhigungseinrichtung (134) geleitet wird, welche in Messfluidströmungsrichtung (123) gesehen vor der Düse (60) angeordnet wird, und dass das Messfluid durch eine zweite Strömungsberuhigungseinrichtung (138) geleitet wird, welche in Messfluidströmungsrichtung (123) gesehen hinter der Düse (60) angeordnet wird.

12. Verfahren nach einem der Ansprüche 8 bis 11, **dadurch gekennzeichnet, dass** die mindestens eine Strömungsberuhigungseinrichtung (134, 138) in dem Strömungskanal (36) angeordnet wird.

13. Verfahren nach einem der Ansprüche 8 bis 12, **dadurch gekennzeichnet, dass** das Messfluid durch mindestens einen Durchströmungskörper (136, 140) geleitet wird und dass der mindestens eine Durchströmungskörper (136, 140) porös ist.

14. Verfahren nach einem der Ansprüche 11 bis 13, **dadurch gekennzeichnet, dass** die erste Strömungsberuhigungseinrichtung (134) mindestens einen ersten porösen Durchströmungskörper (136) umfasst, dass die zweite Strömungsberuhigungseinrichtung (138) mindestens einen zweiten porösen Durchströmungskörper (140) umfasst und dass der erste Durchströmungskörper (136) eine höhere Porosität aufweist als der zweite Durchströmungskörper (140).

15. Verwendung einer Vorrichtung (10) nach einem der Ansprüche 1 bis 7 zur Durchführung eines Verfahrens nach einem der Ansprüche 8 bis 14.

## Claims

1. Device (10) for geometry measurement on a workpiece, comprising a housing (12) with a flow channel (36) in which there is arranged a nozzle (60) for a measuring fluid to flow though in a measuring fluid flow direction (123), and at least one flow calming device (134, 138) which, seen in the measuring fluid flow direction (123), is arranged before or after the nozzle (60), a first pressure measuring device (76) being provided for measuring a first measuring fluid pressure existing before the nozzle (60), seen in the measuring fluid flow direction (123), and/or at least one second pressure measuring device (82) being provided for measuring a second measuring fluid pressure existing after the nozzle (60), seen in the measuring fluid flow direction (123), and/or at least one pressure measuring device (88) being provided for measuring a measuring fluid differential pressure existing over the nozzle (60), **characterized in that** the at least one flow calming device (134, 138) comprises a flow inlet surface (148, 152) which, seen in the measuring fluid flow direction (123), is arranged before a fluidic connection (80, 86, 92, 94) of the at least one pressure measuring device (76, 82, 88) with the flow channel (36), and **in that** the at least one flow calming device (134, 138) comprises a flow outlet surface (150, 154) which, seen in the measuring fluid flow direction (123), is arranged after the fluidic connection (80, 86, 92, 94) of the at least one pressure measuring device (76, 82, 88) with the flow channel (36).

2. Device (10) in accordance with claim 1, **characterized in that** the at least one flow calming device (134), seen in the measuring fluid flow direction (123), is arranged before the nozzle (60), and **in that** its flow outlet surface (150) is arranged at or adjacent to a nozzle inlet (124) of the nozzle (60).

3. Device (10) in accordance with claim 1 or 2, **characterized in that** the at least one flow calming device (138), seen in the measuring fluid flow direction (123), is arranged after the nozzle (60), and **in that** its flow inlet surface (152) is arranged at or adjacent to a nozzle outlet (126) of the nozzle (60).

4. Device (10) in accordance with any one of the preceding claims, **characterized by** at least one first flow calming device (134) which, seen in the measuring fluid flow direction (123), is arranged before the nozzle (60), and by at least one second flow calming device (138) which, seen in the measuring fluid flow direction (123), is arranged after the nozzle (60).

5. Device (10) in accordance with claim 4, **characterized in that** the flow calming devices (134, 138) are arranged in the flow channel (36).

6. Device (10) in accordance with any one of the preceding claims, **characterized in that** the at least one flow calming device (134, 138) comprises at least one flow-through body (136, 140), and **in that** the at least one flow-through body (136, 140) is porous.

7. Device (10) in accordance with any one of claims 4 to 6, **characterized in that** the first flow calming device (134) comprises at least one first porous flow-through body (136), **in that** the second flow calming device (138) comprises at least one second porous flow-through body (140), and **in that** the first flow-through body (136) has a higher porosity than the second flow-through body (140).

8. Method for geometry measurement on a workpiece (118), wherein a measuring fluid flows in a measuring fluid flow direction (123) through a nozzle (60) arranged in a flow channel (36) of a housing (12), and the workpiece (118) is acted upon with the measuring fluid, wherein, seen in the measuring fluid flow direction (123), before and/or after the nozzle (60) at least a partial amount of the measuring fluid flow is calmed by means of at least one flow calming device (134, 138), wherein a first measuring fluid pressure existing before the nozzle (60), seen in the measuring fluid flow direction (123), and/or a second measuring fluid pressure existing after the nozzle (60), seen in the measuring fluid flow direction (123), and/or a measuring fluid differential pressure existing over the nozzle (60) is/are measured, **characterized in that** the measuring fluid is conducted through at least one first section of the flow calming device (134, 138), is subsequently fed to a pressure measuring device (76, 82, 88) for measurement of a measuring fluid pressure or a measuring fluid differential pressure and is then conducted through at least one second section of the flow calming device (134, 138).

9. Method in accordance with claim 8, **characterized in that** the at least one flow calming device (134), seen in the measuring fluid flow direction (123), is arranged before the nozzle (60) and comprises a flow outlet surface (150), and **in that** the flow outlet surface (150) is arranged at or adjacent to a nozzle inlet (124) of the nozzle (60).

10. Method in accordance with claim 8 or 9, **characterized in that** the at least one flow calming device (138), seen in the measuring fluid flow direction (123), is arranged after the nozzle (60) and comprises a flow inlet surface (152), and **in that** the flow inlet surface (152) is arranged at or adjacent to a nozzle outlet (126) of the nozzle (60).

11. Method in accordance with any one of claims 8 to 10, **characterized in that** the measuring fluid is conducted through a first flow calming device (134) which, seen in the measuring fluid flow direction (123), is arranged before the nozzle (60), and **in that** the measuring fluid is conducted through a second flow calming device (138) which, seen in the measuring fluid flow direction (123), is arranged after the nozzle (60).

12. Method in accordance with any one of claims 8 to 11, **characterized in that** the at least one flow calming device (134, 138) is arranged in the flow channel (36).

13. Method in accordance with any one of claims 8 to 12, **characterized in that** the measuring fluid is conducted through at least one flow-through body (136, 140), and **in that** the at least one flow-through body (136, 140) is porous.

14. Method in accordance with any one of claims 11 to 13, **characterized in that** the first flow calming device (134) comprises at least one first porous flow-through body (136), **in that** the second flow calming device (138) comprises at least one second porous flow-through body (140), and **in that** the first flow-through body (136) has a higher porosity than the second flow-through body (140).

15. Use of a device (10) in accordance with any one of claims 1 to 7 for performing a method in accordance with any one of claims 8 to 14.

## Revendications

1. Ensemble de mesure (10) pour la mesure d'une caractéristique géométrique sur une pièce d'oeuvre, comprenant un carter (12) avec un canal d'écoulement (36) dans lequel est agencé un ajutage (60) destiné à être traversé par l'écoulement d'un fluide de mesure dans une direction d'écoulement (123) du fluide de mesure, et comprenant également au moins un dispositif de tranquillisation d'écoulement (134, 138), qui, vu dans la direction d'écoulement (123) du fluide de mesure, est agencé en amont ou en aval de l'ajutage (60), ensemble
dans lequel sont prévus un premier dispositif de mesure de pression (76) pour mesurer une première pression de fluide de mesure existant en amont de l'ajutage (60) en se référant à la direction d'écoulement (123) du fluide de mesure, et/ou au moins un deuxième dispositif de mesure de pression (82) pour mesurer une deuxième pression de fluide de mesure existant en aval de l'ajutage (60) en se référant à la direction d'écoulement (123) du fluide de mesure, et/ou au moins un dispositif de mesure de pression (88) pour mesurer une pression différentielle du fluide de mesure existant au passage de l'ajutage (60),
**caractérisé**
**en ce que** ledit au moins un dispositif de tranquillisation d'écoulement (134, 138) présente une surface d'entrée d'écoulement (148, 152), qui, en se référant à la direction d'écoulement (123) du fluide de mesure, est agencée en amont d'une liaison (80, 86, 92, 94), active sur le plan fluidique, dudit au moins un dispositif de mesure de pression (76, 82, 88) avec le canal d'écoulement de fluide (36), et
**en ce que** ledit au moins un dispositif de tranquillisation d'écoulement (134, 138) présente une surface de sortie d'écoulement (150, 154), qui, en se référant à la direction d'écoulement (123) du fluide de mesure, est agencée en aval d'une liaison (80, 86, 92, 94), active sur le plan fluidique, dudit au moins un dispositif de mesure de pression (76, 82, 88) avec le canal d'écoulement de fluide (36).

2. Ensemble (10) selon la revendication 1, **caractérisé en ce que** ledit au moins un dispositif de tranquillisation d'écoulement (134) est agencé, en se référant à la direction d'écoulement (123) du fluide de mesure, en amont de l'ajutage (60), et **en ce que** sa surface de sortie d'écoulement (150) est agencée au niveau ou au voisinage d'une entrée d'ajutage (124) de l'ajutage (60).

3. Ensemble (10) selon la revendication 1 ou la revendication 2, **caractérisé en ce que** ledit au moins un dispositif de tranquillisation d'écoulement (138) est agencé, en se référant à la direction d'écoulement (123) du fluide de mesure, en aval de l'ajutage (60), et **en ce que** sa surface d'entrée d'écoulement (152) est agencée au niveau ou au voisinage d'une sortie d'ajutage (126) de l'ajutage (60).

4. Ensemble (10) selon l'une des revendications précédentes, **caractérisé par** au moins un premier dispositif de tranquillisation d'écoulement (134), qui est agencé, en se référant à la direction d'écoulement (123) du fluide de mesure, en amont de l'ajutage (60), et par au moins un deuxième dispositif de tranquillisation d'écoulement (138), qui, en se référant à la direction d'écoulement (123) du fluide de mesure, est agencé en aval de l'ajutage (60).

5. Ensemble (10) selon la revendication 4, **caractérisé en ce que** les dispositifs de tranquillisation d'écoulement (134, 138) sont agencés dans le canal d'écoulement (36).

6. Ensemble (10) selon l'une des revendications précédentes, **caractérisé en ce que** ledit au moins un dispositif de tranquillisation d'écoulement (134, 138) comprend au moins un corps de passage d'écoulement (136, 140), et **en ce que** ledit au moins un corps de passage d'écoulement (136, 140) est poreux.

7. Ensemble (10) selon l'une des revendications 4 à 6, **caractérisé en ce que** le premier dispositif de tranquillisation d'écoulement (134) comprend au moins un premier corps de passage d'écoulement (136) poreux, **en ce que** le deuxième dispositif de tranquillisation d'écoulement (138) comprend au moins un deuxième corps de passage d'écoulement (140) poreux, et **en ce que** le premier corps de passage d'écoulement (136) présente une porosité plus élevée que le deuxième corps de passage d'écoulement (140).

8. Procédé de mesure d'une caractéristique géométrique sur une pièce d'oeuvre (118),
selon lequel un ajutage (60) agencé dans un canal d'écoulement (36) d'un carter (12), est traversé par l'écoulement d'un fluide de mesure dans une direction d'écoulement (123) du fluide de mesure, et
selon lequel la pièce d'oeuvre (118) est alimentée par le fluide de mesure,
selon lequel au moins une partie de l'écoulement de fluide de mesure est tranquillisée au moyen d'au moins un dispositif de tranquillisation d'écoulement (134, 138), en amont et/ou en aval de l'ajutage (60) en se référant à la direction d'écoulement (123) du fluide de mesure,
selon lequel on mesure une première pression du fluide de mesure, qui, en se référant à la direction d'écoulement (123) du fluide de mesure, existe en amont de l'ajutage (60), et/ou une deuxième pression du fluide de mesure, qui, en se référant à la direction d'écoulement (123) du fluide de mesure, existe en aval de l'ajutage (60), et/ou une pression différentielle du fluide de mesure existant au passage de l'ajutage (60),
**caractérisé en ce que** l'on fait passer le fluide de mesure à travers au moins un premier tronçon du dispositif de tranquillisation d'écoulement (134, 138), on l'amène ensuite à un dispositif de mesure (76, 82, 88) pour mesurer une pression du fluide de mesure ou une pression différentielle du fluide de mesure, et finalement on le fait passer à travers au moins un deuxième tronçon du dispositif de tranquillisation d'écoulement (134, 138).

9. Procédé selon la revendication 8, **caractérisé en ce que** ledit au moins un dispositif de tranquillisation d'écoulement (134) est agencé, en se référant à la direction d'écoulement (123) du fluide de mesure, en amont de l'ajutage (60), et présente une surface de sortie d'écoulement (150), et **en ce que** l'on agence la surface de sortie d'écoulement (150), au niveau ou au voisinage d'une entrée d'ajutage (124) de l'ajutage (60).

10. Procédé selon la revendication 8 ou la revendication 9, **caractérisé en ce que** ledit au moins un dispositif de tranquillisation d'écoulement (138) est agencé, en se référant à la direction d'écoulement (123) du fluide de mesure, en aval de l'ajutage (60), et présente une surface d'entrée d'écoulement (152), et **en ce que** l'on agence la surface d'entrée d'écoulement (152), au niveau ou au voisinage d'une sortie d'ajutage (126) de l'ajutage (60).

11. Procédé selon l'une des revendications 8 à 10, **caractérisé en ce que** l'on fait passer le fluide de mesure à travers un premier dispositif de tranquillisation d'écoulement (134), que l'on agence, en se référant à la direction d'écoulement (123) du fluide de mesure, en amont de l'ajutage (60), et **en ce que** l'on fait passer le fluide de mesure à travers un deuxième dispositif de tranquillisation d'écoulement (138), que l'on agence, en se référant à la direction d'écoulement (123) du fluide de mesure, en aval de l'ajutage (60).

12. Procédé selon l'une des revendications 8 à 11, **caractérisé en ce que** l'on agence ledit au moins un dispositif de tranquillisation d'écoulement (134, 138) dans le canal d'écoulement (36).

13. Procédé selon l'une des revendications 8 à 12, **caractérisé en ce que** l'on fait passer le fluide de mesure à travers au moins un corps de passage d'écoulement (136, 140), et **en ce que** ledit au moins un corps de passage d'écoulement (136, 140) est poreux.

14. Procédé selon l'une des revendications 11 à 13, **caractérisé en ce que** le premier dispositif de tranquillisation d'écoulement (134) comprend au moins un premier corps de passage d'écoulement (136) poreux, **en ce que** le deuxième dispositif de tranquillisation d'écoulement (138) comprend au moins un deuxième corps de passage d'écoulement (140) poreux, et **en ce que** le premier corps de passage d'écoulement (136) présente une porosité plus élevée que le deuxième corps de passage d'écoulement (140).

15. Utilisation d'un dispositif (10) selon l'une des revendications 1 à 7 pour la mise en oeuvre d'un procédé selon l'une des revendications 8 à 14.
